# DEMANDE DE BREVET EUROPEEN

(11) **EP 4 230 008 A1**
(43) Date de publication de la demande: **23.08.2023**
(21) Numéro de dépôt: 23305226.5
(22) Date de dépôt: 21.02.2023
(51) Int. Cl.: A01B 1/16

(54) **DISPOSITIF EXTRACTEUR D'UN OBJET SOLIDE IMPLANTÉ DANS UN SUBSTRAT SOLIDE ET PROCÉDÉ D'EXTRACTION**

(30) Priorité: 22.02.2022 FR 2201557
(71) Demandeur: Boisseau, Pierre, 82500 Beaumont de Lomagne (FR)
(72) Inventeur: Boisseau, Pierre, 82500 Beaumont de Lomagne (FR)
(74) Mandataire: BARRE LAFORGUE

(57) **Abrégé**

L'invention concerne un dispositif (1) extracteur d'un objet solide implanté dans un substrat solide, caractérisé en ce qu'il comprend un enroulement (2) hélicoïdal formé d'une tige (3) hélicoïdale, l'enroulement (2) hélicoïdal s'étendant longitudinalement selon un axe (5) d'allongement du dispositif (1) extracteur, dispositif (1) dans lequel ;
un tronçon, dit tronçon (6) tronconique, de l'enroulement (2) hélicoïdal, s'étendant jusqu'à une extrémité, dite extrémité (7) de forage, libre de l'enroulement (2) hélicoïdal, est formé d'une pluralité de spires (4) de la tige (3) hélicoïdale, les spires (4) de la tige (3) hélicoïdale formant ledit tronçon (6) tronconique étant non jointives et définissant une face (8) interne dudit tronçon (6) tronconique, de forme globalement tronconique et de section droite transversale par rapport à l'axe (5) d'allongement, croissante vers ladite extrémité (7) de forage ;
l'autre extrémité, dite extrémité (9) d'entraînement, de l'enroulement (2) hélicoïdal étant engagée solidairement avec un organe (10) d'assemblage démontable de l'enroulement (2) hélicoïdal et d'un dispositif d'entraînement en rotation du dispositif (1) extracteur selon l'axe (5) d'allongement du dispositif (1) extracteur.

## Description

L'invention concerne un dispositif extracteur d'un objet solide implanté dans un substrat solide -notamment dans un sol- et un procédé d'extraction d'un tel objet implanté. L'invention concerne en particulier un tel dispositif extracteur et un tel procédé d'extraction d'une souche, par exemple d'une souche d'un cep de vigne. Dans le domaine particulier de la vigne, il est souvent nécessaire de devoir arracher sélectivement un cep de vigne malade ou vieillissant ou mort, présent, par exemple, dans un alignement de ceps de vigne. Un tel arrachage est nécessaire en vue du remplacement du cep de vigne et pour maintenir la productivité de la vigne. Un tel arrachage est également nécessaire pour limiter la transmission d'une maladie à partir du cep de vigne malade.

Bien entendu, il convient de pouvoir procéder à un tel arrachage et sans endommager, du fait de cet arrachage, les ceps de vignes vigoureux voisins du cep de vigne malade ou vieillissant ou mort, notamment adjacents et proches de ce cep de vigne.

En outre, il convient de pouvoir procéder à un tel arrachage sélectif d'un cep de vigne, sans pour autant endommager les piquets et les fils de fer porteurs permettant le palissage de la vigne.

Des solutions alternatives sont recherchées pour surseoir à l'utilisation d'un engin de chantier à godet tel qu'une pelleteuse ou une tractopelle pour réaliser un tel arrachage. En effet, un tel arrachage au moyen d'un engin de chantier procède par creusement autour de la souche du cep de vigne et/ou, plus généralement, autour de l'objet implanté et ce creusement affecte nécessairement les ceps de vigne voisins ou les abords de l'objet extrait. Par ailleurs, dans le cas d'un arrachage par une traction exercée sur le cep, cette traction se transmet aux racines du cep en cours d'arrachage et également nécessairement aux racines des ceps voisins ce qui les endommage.

Dans le domaine particulier de l'élevage en mer de moules et autres coquillages, il peut être nécessaire de remplacer un ou plusieurs pieux endommagés d'un alignement de pieux formant un bouchot d'élevage de telles moules ou coquillages, sans toutefois endommager les pieux voisins lors de l'arrachage des pieux endommagés.

L'invention vise à apporter une solution à l'un et/ou l'autre de ces problèmes.

L'invention vise aussi à proposer un dispositif extracteur et un procédé d'extraction d'un objet solide implanté dans un substrat solide permettant d'extraire un tel objet solide implanté à moindre effort.

L'invention vise aussi à proposer un tel dispositif extracteur et un tel procédé d'extraction qui soient simples dans l'utilisation du dispositif et dans la mise en oeuvre du procédé.

L'invention vise aussi à proposer un tel dispositif extracteur et un tel procédé d'extraction permettant d'extraire un objet solide implanté sans nécessiter de réaliser une excavation dans le substrat solide.

L'invention vise en particulier à proposer un tel dispositif extracteur et un tel procédé d'extraction permettant d'extraire un objet solide implanté dans un substrat solide, sans nécessiter de réaliser un creusement du substrat solide autour de l'objet solide implanté.

L'invention vise aussi à proposer un tel dispositif extracteur et un tel procédé d'extraction permettant d'extraire une grande partie, notamment la quasi-totalité, de l'objet solide implanté.

L'invention vise à proposer un tel dispositif extracteur adapté pour permettre un retrait facilité de l'objet solide engagé dans le dispositif extracteur, libérant ainsi le dispositif extracteur.

L'invention concerne un dispositif extracteur d'un objet solide implanté -notamment d'un objet solide allongé implanté sensiblement verticalement- dans un substrat solide, le dispositif extracteur comprenant un enroulement hélicoïdal formé d'une tige hélicoïdale, l'enroulement hélicoïdal s'étendant longitudinalement selon un axe d'allongement du dispositif extracteur, dispositif extracteur dans lequel ;
un tronçon, dit tronçon tronconique, de l'enroulement hélicoïdal, s'étendant jusqu'à une extrémité, dite extrémité de forage, libre de l'enroulement hélicoïdal, est formé d'une pluralité de spires de la tige hélicoïdale, les spires de la tige hélicoïdale formant ledit tronçon tronconique étant non jointives et définissant une face interne dudit tronçon tronconique, de forme globalement tronconique et de section droite transversale par rapport à l'axe d'allongement, croissante vers ladite extrémité de forage ;
l'autre extrémité, dite extrémité d'entrainement, de l'enroulement hélicoïdal étant engagée solidairement avec un organe d'assemblage -notamment d'un organe d'assemblage démontable- de l'enroulement hélicoïdal et d'un système d'entrainement en rotation du dispositif extracteur selon l'axe d'allongement du dispositif extracteur.

L'invention se caractérise en ce que le dispositif extracteur comprend au moins un organe rigide formant crampon -notamment une pluralité d'organes rigides formant crampons-, traversé(s) par la tige hélicoïdale, l'organe rigide formant crampon -notamment chaque organe rigide formant crampon- étant monté mobile en rotation par rapport à une portion de la tige hélicoïdale qui le traverse, la tige hélicoïdale étant mobile en déplacement au travers de l'organe rigide formant crampon -notamment de chaque organe rigide formant crampon- qu'elle traverse.

L'organe crampon est interposé entre la tige hélicoïdale dudit tronçon tronconique et l'objet solide implanté dans le substrat solide en minimisant le glissement de la tige hélicoïdale en déplacement sur le substrat solide implanté au profit de forces de friction intervenant entre l'objet solide implanté et l'organe crampon. L'organe crampon permet un serrage progressif de l'objet solide implanté lors de l'enfoncement du dispositif extracteur du fait de la forme tronconique dudit tronçon tronconique. En outre, les organes rigides formant crampons et leur nombre sont adaptés pour limiter, voire empêcher totalement, un contact de la tige hélicoïdale avec l'objet solide implanté à extraire.

Dans des modes de réalisation avantageux, au moins un organe rigide formant crampon est adapté pour pouvoir coopérer avec une partie de surface de l'objet solide implanté sur laquelle il exerce une contrainte radiale de serrage de la tige hélicoïdale sur l'objet solide implanté.

Dans tout le texte, par convention :
- la tige hélicoïdale de l'enroulement hélicoïdal est dite « dextrogyre » lorsque l'enfoncement de la tige hélicoïdale dans un substrat solide par son extrémité libre de forage est obtenu au moins du fait d'une rotation de la tige hélicoïdale selon l'axe d'allongement de l'enroulement hélicoïdal et dans un sens horaire (dextrogyre), le sens horaire de cette rotation de l'enroulement hélicoïdal étant déterminé par une observation de la tige hélicoïdale par son extrémité longitudinale opposée à l'extrémité de forage et selon l'axe d'allongement de l'enroulement hélicoïdal ;
- la tige hélicoïdale de l'enroulement hélicoïdal est dite « lévogyre » lorsque l'enfoncement de la tige hélicoïdale dans un substrat solide par son extrémité libre de forage est obtenu au moins du fait d'une rotation de la tige hélicoïdale selon l'axe d'allongement de l'enroulement hélicoïdal et dans un sens antihoraire (lévogyre), le sens antihoraire de cette rotation de l'enroulement hélicoïdal étant déterminé par une observation de la tige hélicoïdale par son extrémité longitudinale opposée à l'extrémité de forage et selon l'axe d'allongement de l'enroulement hélicoïdal, et ;
- le terme « sensiblement » indique, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré.

D'une part, la face interne dudit tronçon tronconique délimite un espace adapté pour pouvoir recevoir un objet solide implanté dans le substrat solide, lorsque le dispositif extracteur est entrainé en rotation selon son axe longitudinal et que la tige hélicoïdale progresse par forage dans le substrat solide selon cet axe du fait de la rotation, l'axe d'allongement de l'objet implanté dans le sol étant sensiblement confondu avec l'axe d'allongement du dispositif extracteur et de l'enroulement hélicoïdal. Ladite extrémité de forage de l'enroulement hélicoïdal et dudit tronçon tronconique est destinée à être mise au contact du substrat solide duquel une extraction d'objet solide implanté est recherchée. Ladite extrémité de forage est évasée de sorte que le positionnement du dispositif extracteur à l'aplomb de l'objet solide implanté à extraire est facilité. Rien n'empêche cependant de prévoir un positionnement oblique du dispositif extracteur par rapport à la surface du substrat solide. Ladite extrémité de forage permet d'initier le forage autour de l'objet solide implanté. Ladite extrémité de forage de l'enroulement hélicoïdal et dudit tronçon tronconique est évasée de sorte que l'objet solide implanté subit, du fait de la progression de la tige hélicoïdale par rapport à l'objet implanté, un serrage radial progressif par la tige hélicoïdale et, en combinaison avec l'entrainement du dispositif extracteur en rotation, un moment de forces tendant à désolidariser l'objet implanté et le substrat solide. Ledit tronçon tronconique est entrainé en rotation de façon à enserrer l'objet solide implanté dans le substrat solide en assurant une liaison sécurisée entre le dispositif extracteur et l'objet solide implanté.

D'autre part, la fragmentation du substrat solide entourant l'objet implanté, procurée par la tige hélicoïdale forant le substrat solide, contribue également à un décompactage du substrat solide, à une diminution de sa cohésion et à une désolidarisation au moins partielle de l'objet implanté et du substrat solide, facilitant d'autant l'extraction de l'objet solide pour un moindre effort d'extraction.

Rien n'empêche de prévoir que, dans certains modes de réalisation d'un dispositif extracteur selon l'invention, les spires de la tige hélicoïdale formant ledit tronçon tronconique soit adaptées pour pouvoir subir une déformation élastique par expansion radiale par rapport à l'axe d'allongement, du fait du forage par enfoncement de la tige hélicoïdale entrainée en rotation dans le substrat solide et/ou de l'enroulement de la tige hélicoïdale dudit tronçon tronconique autour de l'objet solide implanté et à son contact, et du fait du serrage de l'objet solide implanté dans l'espace de réception. Du fait de cette déformabilité élastique, les spires de la tige hélicoïdale déformée élastiquement sont adaptées pour pouvoir être ramenés maintenues élastiquement au contact de l'objet implanté.

Ainsi, pour un enroulement hélicoïdal « dextrogyre », le dispositif extracteur est entrainé en rotation dans le sens horaire par l'application d'un couple. Les spires de la tige hélicoïdale dudit tronçon tronconique subissent une déformation élastique par expansion radiale du fait de cette rotation dans le sens horaire, du fait de la résistance au forage et/ou du fait du serrage de l'enroulement hélicoïdal autour et au contact de l'objet solide implanté. Le rappel élastique radial de la tige hélicoïdale produit un anti-couple s'opposant au couple d'entrainement en rotation. L'expansion radiale de la tige hélicoïdale permet une progression plus avancée dudit tronçon tronconique par rapport à l'objet solide implanté, jusqu'à un arrêt de la progression de la tige hélicoïdale dans un état expansé et bloquée au contact de l'objet solide implanté. L'inventeur a observé que dans cette situation, il suffit d'inverser le sens de rotation (sens antihoraire) de l'enroulement hélicoïdal pour obtenir un resserrement des spires dudit tronçon tronconique sur l'objet solide implanté et un serrage augmenté de l'objet solide implanté, le serrage augmenté étant en tout état de cause suffisant pour permettre l'extraction de l'objet solide implanté. L'entrainement en rotation du dispositif extracteur dextrogyre dans le sens antihoraire s'ajoute à l' anti-couple produit du fait du rappel élastique.

Inversement, pour un enroulement hélicoïdal « lévogyre », le dispositif extracteur est entrainé en rotation dans le sens antihoraire par l'application d'un couple. Les spires de la tige hélicoïdale dudit tronçon tronconique subissent une déformation élastique par expansion radiale du fait de cette rotation dans le sens antihoraire, du fait de la résistance au forage et/ou du fait du serrage de l'enroulement hélicoïdal autour et au contact de l'objet solide implanté. Le rappel élastique radial de la tige hélicoïdale produit un anti-couple s'opposant au couple d'entrainement en rotation. L'expansion radiale de la tige hélicoïdale permet une progression plus avancée dudit tronçon tronconique par rapport à l'objet solide implanté, jusqu'à un arrêt de la progression de la tige hélicoïdale dans un état expansé et bloquée au contact de l'objet solide implanté. L'inventeur a observé que dans cette situation, il suffit d'inverser le sens de rotation (sens horaire) de l'enroulement hélicoïdal pour obtenir un resserrement des spires dudit tronçon tronconique sur l'objet solide implanté et un serrage augmenté de l'objet solide implanté, en tout état de cause suffisant pour permettre l'extraction de l'objet solide implanté. L'entrainement en rotation du dispositif extracteur lévogyre dans le sens horaire s'ajoute à l'anti-couple produit du fait du rappel élastique.

Avantageusement, que l'enroulement hélicoïdal soit « dextrogyre » ou « lévogyre », son entrainement en rotation aux fins de forage du substrat solide autour de l'objet solide implanté, respectivement dans le sens horaire ou dans le sens antihoraire, conduit à une expansion radiale de la tige hélicoïdale, de nature à faciliter l'enroulement de la tige hélicoïdale autour de l'objet solide implanté jusqu'à un serrage limite de l'objet solide implanté dans ledit tronçon tronconique de la tige hélicoïdale ainsi expansée radialement. L'inventeur a observé qu'une inversion du sens de rotation de l'enroulement hélicoïdal - rotation inversée dans le sens antihoraire pour un enroulement hélicoïdal « dextrogyre » ou dans le sens horaire pour un enroulement hélicoïdal « lévogyre »- conduit à un resserrement de la tige hélicoïdale autour de l'objet solide implanté et une augmentation des forces de compression et de serrage exercée par la tige hélicoïdale sur le substrat solide implanté. Ces forces de compression augmentées sont de nature à permettre un entrainement en rotation sans glissement de la tige hélicoïdale autour de l'objet solide implanté et la désolidarisation et l'arrachage en rotation facilité de l'objet solide implanté.

Avantageusement, le dispositif extracteur selon l'invention est adapté pour pouvoir être fixé à un système d'entrainement en rotation du dispositif selon l'invention. Le système d'entrainement en rotation du dispositif extracteur peut être de tout type adapté. Il peut s'agir d'un système d'entrainement comprenant tout type de moteur, par exemple un moteur thermique ou un moteur électrique. Il peut, par exemple, s'agir d'un système d'entrainement en rotation d'une tarière. Le dispositif extracteur et le système d'entrainement peuvent être solidarisés par tout moyen, amovible ou non.

Selon certains modes de réalisation, l'enroulement hélicoïdal forme un deuxième tronçon, dit tronçon cylindrique, s'étendant à partir dudit tronçon tronconique jusqu'à ladite extrémité d'entrainement de l'enroulement hélicoïdal, la pluralité de spires de la tige hélicoïdale formant ledit tronçon cylindrique définissant une face interne dudit tronçon cylindrique de forme cylindrique de révolution. La longueur dudit tronçon cylindrique est choisie selon la profondeur à laquelle l'objet allongé est implanté dans le substrat solide.

Selon certains modes de réalisation de l'invention, la tige hélicoïdale présente une forme convexe selon au moins une coupe -notamment selon chaque coupe- transversale par rapport à l'axe d'allongement de l'enroulement hélicoïdal, notamment une forme convexe choisie parmi une forme sensiblement circulaire, une forme polygonale -notamment une forme octogonale- sensiblement inscrite dans un cercle et une forme ovale. Dans un mode de réalisation préférentiel, la tige hélicoïdale présente une forme sensiblement circulaire selon chaque coupe transversale par rapport à l'axe d'allongement de l'enroulement hélicoïdal. Dans ces modes de réalisation préférentiels, la tige hélicoïdale peut présenter tout diamètre selon chaque coupe transversale. Dans certains modes de réalisation préférentiels, la tige hélicoïdale présente selon au moins une coupe -notamment selon chaque coupe- transversale par rapport à l'axe d'allongement de l'enroulement hélicoïdal, une forme circulaire de diamètre compris entre 4 mm et 20 mm, notamment compris entre 4 mm et 10 mm, particulièrement comprise entre 5 et 10, de préférence compris entre 6 et 9 mm, plus particulièrement de l'ordre de 8 mm.

Selon certains modes de réalisation de l'invention, la tige hélicoïdale formant ledit tronçon tronconique présente un pas de valeur comprise entre 25 mm et 200 mm, notamment compris entre 25 et 50 mm, de préférence comprise entre 30 mm et 40 mm, plus préférentiellement de l'ordre de 35 mm. Selon certains modes de réalisation de l'invention, la tige hélicoïdale formant ledit tronçon tronconique présente un pas de valeur constante sur la longueur dudit tronçon tronconique, le pas de valeur constante de la tige hélicoïdale formant ledit tronçon tronconique étant compris entre 25 mm et 50 mm, notamment compris entre 30 mm et 40 mm, de préférence de l'ordre de 35 mm. Selon certains modes de réalisation de l'invention, l'enroulement hélicoïdal est un enroulement hélicoïdal à pas constant.

Selon certains modes de réalisation de l'invention, au moins un organe crampon -notamment chaque organe crampon- s'étend dans ledit tronçon tronconique et est adapté pour pouvoir coopérer chacun avec une partie de surface de l'objet solide implanté sur laquelle il exerce une contrainte radiale de serrage croissante du fait du déplacement de la tige hélicoïdale traversant l'organe rigide formant crampon et de la forme tronconique de la tige hélicoïdale dudit tronçon tronconique.

Selon certains modes de réalisation de l'invention, au moins un -notamment chaque- organe rigide formant crampon présente une forme choisie parmi une forme polyédrique inscrite dans une sphère et une forme sphérique, chaque organe crampon étant traversé radialement par la tige hélicoïdale. Le déplacement de chaque organe rigide formant crampon en surface de l'objet solide implanté est facilité, jusqu'à atteindre une position de serrage de l'objet solide implanté lors de l'enfoncement du dispositif extracteur. Lors de l'enfoncement du dispositif extracteur dans le substrat solide entourant l'objet solide implanté à extraire, le(s) organe(s) crampon(s) est(sont) déplacé(s) sur la tige hélicoïdale en direction de ladite extrémité d'entrainement du fait de l'enfoncement de la tige hélicoïdale, jusqu'à entrer en contact avec l'objet solide implanté du fait de la conicité dudit tronçon tronconique. La poursuite de l'enfoncement de la tige hélicoïdale autour de l'objet solide implanté provoque, du fait de la conicité dudit tronçon tronconique, un serrage du(des) organe(s) crampon(s) sur l'objet solide implanté, l'entrainement en rotation de l'objet solide implanté, sa désolidarisation du substrat solide et son extraction possible.

Selon certains modes de réalisation de l'invention, les organes rigides formant crampons sont de même taille et présentent un rayon de valeur inférieure à la valeur d'un demi pas de la tige hélicoïdale. Le déplacement de chaque organe rigide formant crampon est facilité. En particulier, le déplacement en regard de deux organes rigides formant crampons sur deux spires consécutivement adjacentes est possible. Rien n'empêche cependant de prévoir que, selon certains modes de réalisation, qu'au moins deux organes rigides formant crampons présentent des tailles différentes, notamment des rayons de valeurs différentes.

Selon certains modes de réalisation de l'invention, le dispositif extracteur selon l'invention comprend un nombre d'organes rigides formant crampons compris entre 5 et 30, notamment compris entre 8 et 20, particulièrement de l'ordre de 10 ou plus. Le nombre d'organes rigides formant crampons est choisi selon le pas de l'enroulement hélicoïdal et de la tige hélicoïde.

Selon certains modes de réalisation de l'invention, la tige hélicoïdale présente au moins une butée fixe et adaptée pour pouvoir bloquer au moins un organe solide formant crampon en déplacement le long de la tige hélicoïdale, en direction de ladite extrémité d'entrainement. Selon certains de ces modes de réalisation de l'invention, chaque butée fixe est disposée sur la tige hélicoïdale dudit tronçon tronconique de l'enroulement hélicoïdal. Selon certains de ces modes de réalisation de l'invention, chaque organe rigide formant crampon est interposé entre deux butées fixes. Selon certains de ces modes de réalisation de l'invention, au moins une butée fixe est une butée déplaçable et blocable.

La tige hélicoïdale présente une extrémité libre s'étendant à ladite extrémité de forage de l'enroulement hélicoïdal, l'extrémité libre étant conformée pour pouvoir faciliter une progression de l'enroulement hélicoïdal dans le substrat solide par forage et pour fragiliser le substrat solide autour de l'objet solide implanté, du fait de cette progression. Selon certains modes de réalisation, l'extrémité libre est taillée en biseau. Selon certains modes de réalisation, l'extrémité libre est munie d'un embout de forage s'étendant selon l'allongement de la tige hélicoïdale. L'embout de forage peut être un embout pointu. Selon certains modes de réalisation, l'embout de forage peut présenter selon toute section droite transversale un diamètre au plus égal au diamètre de la section droite transversale de la tige hélicoïdale. Selon certains autres modes de réalisation, l'embout de forage peut présenter en section droite transversale un diamètre supérieur au diamètre de la section droite transversale de la tige hélicoïdale. Dans ces modes de réalisation particuliers, l'embout de forage fait office de butée fixe de blocage d'au moins un organe solide formant crampon en déplacement le long de la tige hélicoïdale, en direction de ladite extrémité de forage. Dans ces modes de réalisation particuliers, l'embout de forage est de préférence monté amovible par rapport à la tige hélicoïdale. L'embout de forage amovible permet un remplacement d'au moins un organe solide formant crampon.

Selon certains de ces modes de réalisation de l'invention, la tige hélicoïdale est formée en au moins un matériau métallique, notamment en acier dur. On parle aussi d'acier ressort. Dans certains modes de réalisation, la tige hélicoïdale est formée d'un acier dur ou acier ressort de nuance comprise entre XC65 et XC75, c'est-à-dire un acier dont la teneur en carbone est comprise entre 0,65% et 0,75%.

Ledit tronçon tronconique présente une extrémité de forage évasée et destinée à guider par enfouissement autour de l'objet solide implanté, ledit tronçon tronconique entrainé en rotation selon un axe de rotation coaxial à l'axe d'allongement de l'objet solide implanté. Ledit tronçon tronconique ménage un espace central de réception de l'objet solide implanté destiné à pouvoir accommoder l'objet solide implanté lors de l'enfouissement de l'enroulement hélicoïdal autour de l'objet solide implanté. Ledit tronçon tronconique présente une section droite transversale décroissante à partir de ladite extrémité de forage vers ladite extrémité d'entrainement opposée.

Ledit tronçon tronconique s'étend longitudinalement à partir de ladite extrémité de forage vers ladite extrémité d'entrainement jusqu'à une extrémité rétrécie dudit tronçon tronconique, l'extrémité rétrécie présentant une section droite transversale de forme sensiblement circulaire et de dimensions compatibles avec le diamètre de l'objet solide implanté à extraire. Également, ledit tronçon tronconique présente une longueur choisie pour être compatible avec une longueur d'implantation de l'objet solide implanté.

Selon certains modes de réalisation, l'enroulement hélicoïdal est un enroulement à pas variable, notamment un enroulement à pas décroissant vers ladite extrémité d'entrainement. Selon certains de ces modes de réalisation, les spires sont jointives à ladite extrémité d'entrainement.

Selon certains modes de réalisation, la tige hélicoïdale de l'enroulement hélicoïdal présente un sens d'enroulement, dit sens d'enroulement dextrogyre, choisi de façon qu'un enfoncement de la tige hélicoïdale dans le substrat solide par ladite extrémité de forage soit permis -notamment soit rendu possible uniquement- du fait d'une rotation de la tige hélicoïdale selon l'axe d'allongement de l'enroulement hélicoïdal et dans un sens horaire de rotation de l'enroulement hélicoïdal, le sens horaire de rotation de l'enroulement hélicoïdal étant déterminé par observation de la rotation de la tige hélicoïdale, par son extrémité longitudinale opposée à ladite extrémité de forage et selon l'axe d'allongement de l'enroulement hélicoïdal.

Selon certains autres modes de réalisation, la tige hélicoïdale de l'enroulement hélicoïdal présente un sens d'enroulement, dit sens d'enroulement lévogyre, choisi de façon qu'un enfoncement de la tige hélicoïdale dans le substrat solide par ladite extrémité de forage soit permis -notamment soit rendu possible uniquement- du fait d'une rotation de la tige hélicoïdale selon l'axe d'allongement de l'enroulement hélicoïdal et dans un sens antihoraire de rotation de l'enroulement hélicoïdal, le sens antihoraire de rotation de l'enroulement hélicoïdal étant déterminé par observation de la rotation de la tige hélicoïdale par son extrémité longitudinale opposée à ladite extrémité de forage et selon l'axe d'allongement de l'enroulement hélicoïdal.

L'invention concerne aussi un procédé d'extraction d'un objet solide implanté -notamment d'un objet solide allongé implanté sensiblement verticalement- dans un substrat solide -notamment dans un sol-.

L'invention concerne un procédé d'extraction d'un objet solide implanté -notamment d'un objet solide allongé implanté sensiblement verticalement- dans un substrat solide - notamment dans un sol-., dans lequel :
- un dispositif extracteur selon l'invention est choisi ;
- ladite extrémité de forage du dispositif extracteur est mise au contact du substrat solide -notamment de façon que l'axe d'allongement de l'enroulement hélicoïdal et l'axe d'allongement de l'objet solide implanté dans le substrat solide soient sensiblement superposés-, puis ;
- lors d'une première étape, le dispositif extracteur est entrainé en rotation selon un premier sens de rotation, ce par quoi ledit tronçon tronconique fore le substrat solide -notamment par cisaillement- autour de l'objet solide implanté et coopère avec l'objet solide implanté, par serrage progressif de l'objet solide implanté du fait dudit tronçon tronconique, jusque dans un état du dispositif extracteur dans lequel le dispositif extracteur est bloqué en rotation par l'objet solide implanté, l'objet solide implanté étant au moins en partie désolidarisé du substrat solide ;
- lors d'une deuxième étape le dispositif extracteur est entrainé en rotation selon un deuxième sens de rotation, opposé au premier sens, ce par quoi un resserrement radial dudit tronçon tronconique se produit autour de l'objet solide implanté du fait de la tige hélicoïdale et du deuxième sens de rotation et un serrage du substrat solde augmenté par rapport au serrage obtenu lors de la première étape de rotation selon le premier sens de rotation ;
- le serrage augmenté étant adapté pour permettre une application d'une contrainte en rotation sur l'objet solide implanté, d'intensité augmentée par rapport à la contrainte appliquée lors de la première étape, ce par quoi l'objet est au moins en partie désolidarisé du substrat solide ; puis,
- l'objet solide est extrait du substrat solide.

Avantageusement, lorsque la désolidarisation de l'objet solide implanté et du substrat solide n'est pas intervenue à l'issue de la première étape (soit du fait de l'enfouissement complet de l'enroulement hélicoïdal, soit du fait d'un blocage du dispositif extracteur en rotation sans désolidarisation de l'objet solide implanté), le sens de rotation du dispositif extracteur est inversé par rapport au premier sens de rotation, de sorte que la tige hélicoïdale radialement expansée du fait de la rotation dans le premier sens de rotation, se resserre sur l'objet solide implanté sur toute la longueur de la tige hélicoïdale coopérant avec l'objet solide implanté et l'objet solide implanté est extrait.

Dans tous les modes de réalisation d'un procédé selon l'invention, que le sens d'enroulement de la tige hélicoïdale de l'enroulement hélicoïdal soit dextrogyre ou lévogyre, on dispose ladite extrémité de forage de l'enroulement hélicoïdal au contact du substrat solide et en appui sur le substrat solide -notamment sur le sol - de façon à aligner l'axe d'allongement du dispositif extracteur et l'axe d'allongement de l'objet solide implanté. Du fait de la mise en rotation dans un sens horaire ou antihoraire de l'enroulement hélicoïdal respectivement dextrogyre ou lévogyre, ladite extrémité de forage pénètre dans le substrat solide, guide l'avancée en profondeur de la tige hélicoïdale autour de l'objet solide implanté et diminue la cohésion du substrat solide. Lors de ce forage et de cette avancée de la tige hélicoïdale en profondeur, ledit tronçon tronconique enserre l'objet solide implanté en lui impartissant une contrainte en rotation. La combinaison de la diminution de la cohésion du substrat solide et de l'augmentation de la contrainte en rotation du fait de la forme tronconique dudit tronçon tronconique permet une désolidarisation de l'objet solide implanté par rapport au substrat solide, permettant l'extraction ultérieure de l'objet solide.

Selon certains modes de réalisation, l'objet au moins en partie désolidarisé du substrat solide est extrait par traction de l'objet désolidarisé selon un axe de traction sensiblement confondu avec l'axe de rotation de l'enroulement hélicoïdal et sans détérioration des objets voisins.

Selon certains modes de réalisation, l'objet solide implanté étant une souche d'un cep de vigne, la souche du cep de vigne au moins en partie désolidarisée du substrat solide est extraite par traction vers le haut de la souche désolidarisée selon un axe de traction sensiblement confondu avec l'axe de rotation de l'enroulement hélicoïdal et sans détérioration de ceps de vigne voisins, de piquets et de fils de fer porteurs de la vigne.

Selon certains modes de réalisation, l'objet implanté étant extrait du substrat solide, on sépare l'objet extrait et le dispositif extracteur par blocage de l'objet -notamment par des moyens de serrage de l'objet extrait, adaptés pour pouvoir être intercalés entre les spires de la tige hélicoïdale- et mise en rotation du dispositif extracteur selon le premier sens de rotation.

L'invention concerne également un dispositif extracteur et un procédé d'extraction d'un objet solide implanté dans un substrat solide, caractérisés en combinaison par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante qui se réfère aux figures annexées données uniquement à titre de description non limitative de certains modes de réalisation particuliers de l'invention et, dans lesquelles :
[Fig 1] la figure 1 est une représentation d'un mode de réalisation d'un dispositif extracteur selon l'invention, vu de côté, et ;
[Fig 2] la figure 2 est une représentation en coupe selon le plan II-II représenté en figure 1, de ce mode de réalisation d'un dispositif extracteur selon l'invention.

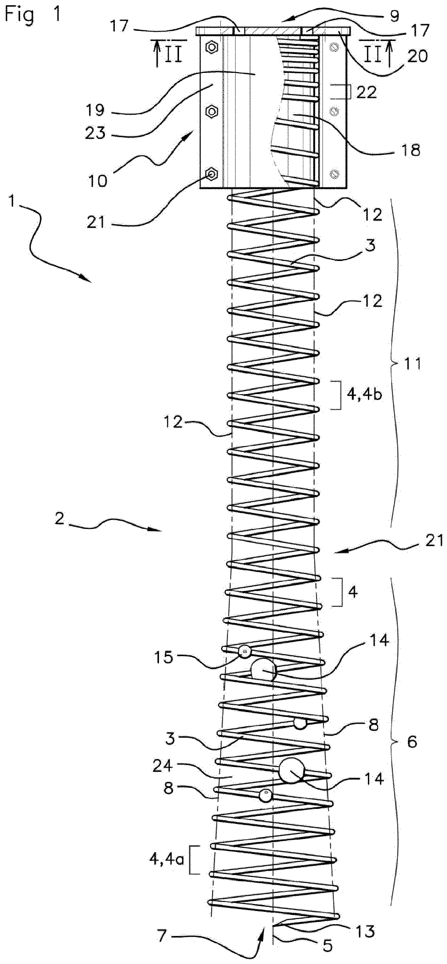

Dans les figures, sauf indication spécifiques, les proportions des différents éléments constitutifs du dispositif extracteur ne sont pas nécessairement respectées, notamment aux fins de clarté de l'exposé. En outre, le nombre d'organes rigides formant crampon représentés en figure 1 a été limité à deux organes et le nombre de butée à trois butées, uniquement aux fins de lisibilité de la figure 1.

Un mode particulier de réalisation d'un dispositif 1 extracteur selon l'invention est représenté en figure 1. Le dispositif 1 extracteur représenté peut être un dispositif 1 extracteur d'une souche d'un cep implanté dans une vigne. Toute autre utilisation peut être envisagée. Par exemple, le dispositif 1 extracteur peut être utilisé pour extraire un pieu endommagé d'un alignement de pieux implantés dans du sable marin et formant un bouchot d'élevage de telles moules ou coquillages. Le dispositif 1 extracteur comprend une tige 3 conformée selon un enroulement 2 hélicoïdal s'étendant selon un axe 5 d'allongement de l'enroulement 2 hélicoïdal et du dispositif 1 d'extraction. Dans un mode de réalisation d'un dispositif 1 extracteur destiné à l'arrachage d'un cep de vigne -notamment d'un cep de vigne malade ou vieillissant, le dispositif 1 extracteur présente une longueur comprise entre 800 mm et 1000 mm. Une telle longueur est adaptée au mode d'organisation et aux dimensions du système racinaire d'un cep de vigne. Rien n'empêche cependant de prévoir que la longueur du dispositif 1 extracteur soit inférieure à 800 mm ou supérieure à 1000 mm pour adapter le dispositif 1 extracteur à la forme et dimension de l'objet solide implanté à extraire. L'enroulement 2 hélicoïdal présente selon toute section droite transversale par rapport à l'axe 5 d'allongement, une forme globalement circulaire de diamètre compris entre 100 mm et 200 mm. Un tel diamètre est en particulier adapté pour permettre à la tige 3 hélicoïdale de pouvoir coopérer avec une souche d'un cep de vigne dont le diamètre moyen du tronc peut être compris entre 80 mm et 150 mm.

La tige 3 hélicoïdale du dispositif 1 extracteur est formée en au moins un matériau métallique, par exemple en acier. Le matériau formant la tige 3 hélicoïdale est choisi pour présenter une valeur de résistance élastique en flexion longitudinale proche, mais inférieure à la valeur de résistance plastique en flexion longitudinale et inférieure à la valeur de résistance à la rupture en flexion longitudinale. La tige 3 hélicoïdale est rigide en traction/compression selon l'axe 5 d'allongement de l'enroulement 2 hélicoïdal et est sensiblement non déformable sous l'effet d'une force de compression exercée sur le dispositif 1 extracteur selon l'axe 5 d'allongement aux fins de l'enfoncement de l'enroulement 2 hélicoïdal entrainé en rotation, dans un substrat solide. La tige 3 hélicoïdale et l'enroulement 2 hélicoïdal sont rigides en traction/compression selon l'axe 5 d'allongement de l'enroulement 2 hélicoïdal et sont sensiblement non déformables dans les conditions d'utilisation du dispositif 1 extracteur. De ce fait, l'enfoncement de la tige 3 hélicoïdale de l'enroulement 2 hélicoïdal dans le substrat solide se produit avec un pas d'hélice sensiblement conservé lors de l'enfoncement. Cela étant, rien n'empêche de prévoir que la tige 3 hélicoïdale de l'enroulement 2 hélicoïdal soit élastiquement déformable radialement par rapport à l'axe 5 d'allongement. La tige 3 hélicoïdale peut être avantageusement élastiquement déformable par expansion/rétractation radiales.

La tige 3 hélicoïdale peut présenter une forme convexe selon au moins une -notamment selon toute- coupe radiale par rapport à l'axe 5 d'allongement de l'enroulement 2 hélicoïdal. La forme convexe peut être une forme sensiblement circulaire ou une forme polygonale sensiblement inscrite dans un cercle, ou une forme ovale, notamment une forme ovale dont la direction de la plus grande dimension est sensiblement parallèle à l'axe 5 d'allongement de l'enroulement 2 hélicoïdal.

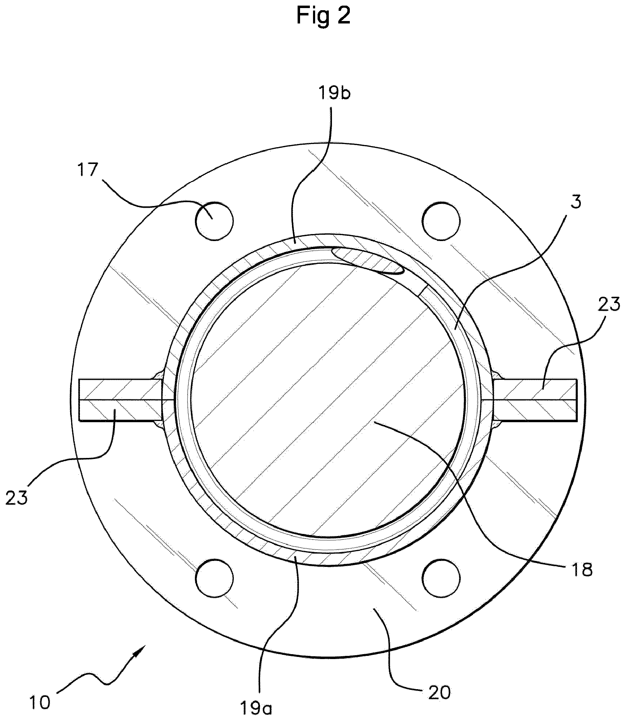

Le dispositif 1 d'extraction comprend un organe 10 d'assemblage du dispositif 1 d'extraction et d'un dispositif d'entrainement en rotation du dispositif 1 extracteur selon l'axe 5 d'allongement. L'organe 10 d'assemblage est disposé à l'une des extrémités longitudinales, dite extrémité 9 d'entrainement, de l'enroulement 2 hélicoïdal, opposée à une deuxième extrémité, dite extrémité 7 de forage, destinée à coopérer avec le substrat solide. L'organe 10 d'assemblage est monté solidaire en rotation de la tige 3 hélicoïdale. Dans le mode de réalisation représenté, l'organe 10 d'assemblage comprend une platine 20 rigide discoïdale montée solidaire d'un cylindre 18 axial. La platine 20 rigide et le cylindre 18 axial peuvent être assemblés par tout moyen adapté, notamment par soudure. Cela étant, rien n'empêche de prévoir que la platine 20 rigide et le cylindre 18 axial soient formés d'une seule pièce, d'un seul tenant. Le cylindre 18 axial est dimensionné pour pouvoir être monté et coopérer avec ladite extrémité 9 d'entrainement de l'enroulement 2 hélicoïdal. Des spires 22 de la tige 3 hélicoïdale de l'enroulement 2 hélicoïdal définissent radialement à ladite extrémité 9 d'entrainement, une face 12 interne de forme cylindrique de révolution et s'étendant tangentiellement aux spires 22 de ladite extrémité 9 d'entrainement. La face 12 interne délimitée par les spires 22 est engagée autour du cylindre 18 axial. La tige 3 hélicoïdale est bloquée en rotation et en translation longitudinale par rapport à l'organe 10 d'assemblage au moyen d'un manchon 19 de serrage radial des spires 22 de la tige 3 hélicoïdale sur le cylindre 18 axial. Dans le mode de réalisation représenté figures 1 et 2, la manchon 19 de serrage est formé en deux parties complémentaires 19a, 19b hémicylindriques chaque hémi-cylindre 19a, 19b étant pourvu de deux prolongements 23 radiaux d'assemblage et de serrage des deux hémi-cylindres 19a, 19b en rapprochement l'un de l'autre et sur les spires 22 de la tige 3 hélicoïdale. La tige 3 hélicoïdale est maintenue solidaire de l'organe 10 d'assemblage dans les deux sens de rotation du d'entrainement. La platine 20 rigide présente au moins un percement 17 d'assemblage de l'organe 10 d'assemblage avec un dispositif (non représenté) d'entrainement en rotation du dispositif 1 extracteur selon l'axe 5 d'allongement.

Dans le mode de réalisation représenté, la tige 3 hélicoïdale de l'enroulement 2 hélicoïdal présente un diamètre de section droite transversale de l'ordre de 6 mm et un pas sensiblement constant sur toute sa longueur ne coopérant pas avec l'organe 10 d'assemblage. Avantageusement, la tige 3 hélicoïdale présente un pas décroissant vers ladite extrémité 9 d'entrainement dans la partie de longueur de la tige 3 hélicoïdale coopérant avec l'organe 10 d'assemblage. La solidarisation de la tige 3 hélicoïdale et de l'organe 10 d'assemblage est ainsi assurée.

Dans le mode de réalisation représenté, l'enroulement 2 hélicoïdal s'étend entre ladite extrémité 9 d'entrainement et ladite extrémité 7 de forage. L'enroulement 2 hélicoïdal présente, s'étendant à partir de ladite extrémité 7 de forage, un tronçon, dit tronçon 6 tronconique, formé d'une pluralité de spires 4a de la tige 3 hélicoïdale. Les spires 4a formant ledit tronçon 6 tronconique sont non jointives et définissent la face 8 interne dudit tronçon 6 tronconique, s'étendant tangentiellement à l'intérieur des spires 4a non jointives. La face 8 interne est de forme globalement tronconique et de section droite transversale par rapport à l'axe 5 d'allongement, croissante vers ladite extrémité 7 de forage. Dans le mode de réalisation représenté, ledit tronçon 6 tronconique présente une longueur de l'ordre de 450 mm. Ledit tronçon 6 tronconique est, d'une part, adapté pour coopérer par ladite extrémité 7 de forage avec un objet solide implanté en forant le substrat solide entourant l'objet solide implanté et en altérant la cohésion du substrat solide autour de l'objet solide implanté du fait de ce forage. Ledit tronçon 6 tronconique est, d'autre part, adapté pour pouvoir, du fait de la progression de la tige 3 hélicoïdale en profondeur autour de l'objet solide implanté, enserrer progressivement l'objet slide implanté dans un espace 24 de réception de l'objet solide, du fait de la forme tronconique dudit tronçon 6 tronconique et du fait de l'enfoncement, jusqu'à un blocage de l'objet solide implanté par rapport audit tronçon 6 tronconique, l'objet solide implanté étant entrainé en rotation du fait de la rotation du dispositif 1 extracteur et désolidarisé du substrat solide.

Dans certains modes de réalisation avantageux, la tige 3 hélicoïdale peut être élastiquement déformable radialement par rapport à l'axe 5 d'allongement de l'enroulement 2 hélicoïdal. En particulier, la tige 3 hélicoïdale peut être avantageusement élastiquement déformable en expansion radiale lors de l'entrainement en rotation du dispositif 1 extracteur selon l'invention dans le sens horaire pur une tige 3 hélicoïdale dextrogyre ou dans le sens antihoraire pur une tige 3 hélicoïdale lévogyre et de l'enfoncement de l'enroulement 2 hélicoïdal dans le substrat solide. Dans ces modes de réalisation, le blocage de l'objet solide implanté par ledit tronçon 6 tronconique, intervient pour un enfoncement plus profond du dispositif 1 extracteur par rapport à l'objet solide implanté. La longueur dudit tronçon 6 tronconique coopérant avec l'objet solide implanté est ainsi augmentée et l'extraction est favorisée.

Dans ces modes de réalisation avantageux, si la désolidarisation de l'objet solide implanté et du substrat solide n'est que partielle, il est procédé à une inversion du sens de rotation de l'enroulement 2 hélicoïdal -dans le sens antihoraire pour une tige 3 hélicoïdale dextrogyre ou dans le sens horaire pour une tige 3 hélicoïdale lévogyre-, ce par quoi la tige 3 hélicoïdale et en particulier la tige 3 hélicoïdale dudit tronçon 6 tronconique subit une restriction radiale d'enserrement augmenté de l'objet solide implanté. L'objet solide implanté est extrait du fait de cette rotation dans le sens inversé de rotation et de cet enserrement augmenté.

Dans le mode de réalisation représenté, l'enroulement 2 hélicoïdal forme un deuxième tronçon 11 cylindrique, de révolution s'étendant à partir dudit tronçon 6 tronconique jusqu'à ladite extrémité 9 d'entrainement. La pluralité de spires 4b dudit tronçon 11 cylindrique définissent une face 12 interne de forme cylindrique de révolution s'étendant tangentiellement à l'intérieur des spires 4b non jointives. Dans le mode de réalisation représenté, ledit tronçon 11 cylindrique présente une longueur de l'ordre de 450 mm. Rien n'empêche cependant de prévoir que le tronçon 11 cylindrique présente toute autre longueur adaptée ou soit absent.

Dans le mode de réalisation représenté, la tige 3 hélicoïdale dudit tronçon 6 tronconique est munie d'une pluralité de butée 15 montées solidaires de la tige 3 hélicoïdale. Dans le mode de réalisation représenté, les butées 15 sont des butées fixes montées immobiles - par exemple par vissage- par rapport à la tige 3 hélicoïdale, par exemple par vissage sur la tige 3 hélicoïdale. Les butées 15 fixes sont adaptées pour pouvoir former une suré-paisseur sur la tige 3 hélicoïdale de façon à favoriser, par un effet de crampon, la friction intervenant entre l'objet solide implanté et l'enroulement 2 hélicoïdal et l'extraction de l'objet solide implanté par entrainement en rotation.

Dans le mode de réalisation représenté, la tige 3 hélicoïdale dudit tronçon 6 tronconique est munie d'une pluralité d'organes 14 rigides formant crampons traversés par la tige 3 hélicoïdale et montés mobile en rotation par rapport à une portion de la tige 3 hélicoïdale qui le traverse, la tige 3 hélicoïdale étant mobile en déplacement au travers de chaque organe 14 crampon qu'elle traverse. Dans le mode de réalisation représenté, chaque organe 14 crampon présente une forme globalement sphérique, chaque organe 14 crampon étant traversé radialement par la tige 3 hélicoïdale. Le diamètre de chaque organe 14 crampon est compris entre 25 mm et 30 mm et le diamètre de l'alésage traversant chaque organe 14 crampon est de l'ordre de 6 mm. Le diamètre et la forme de l'alésage traversant chaque organe 14 crampon sont choisis pour permettre un déplacement par coulissement des organes 14 crampon le long de la tige 3 hélicoïdale. Dans le mode de réalisation représenté, les organes 14 crampons sont de même taille et présentent un rayon de valeur inférieure à la valeur d'un demi pas de la tige 3 hélicoïdale. Ainsi, le déplacement relatif des organes 14 crampons sur deux spires 4 non jointives adjacentes n'est pas entravé.

Dans un mode de mise en oeuvre particulière d'un procédé selon l'invention d'extraction d'un objet solide implanté, dans lequel il est procédé à :
- une première étape d'entrainement en rotation du dispositif 1 extracteur dans le sens horaire de rotation, la tige 3 hélicoïdale étant une tige 3 hélicoïdale dextrogyre, ou respectivement dans le sens antihoraire, la tige 3 hélicoïdale étant une tige 3 hélicoïdale lévogyre, ce par quoi l'enroulement 2 hélicoïdal subit une expansion radiale écartant les organes 14 crampons par rapport à l'axe 5 d'allongement, puis à ;
- une deuxième étape d'entrainement en rotation du dispositif 1 extracteur dans le sens antihoraire de rotation, la tige 3 hélicoïdale étant une tige 3 hélicoïdale dextrogyre, ou respectivement dans le sens horaire, la tige 3 hélicoïdale étant une tige 3 hélicoïdale lévogyre, ce par quoi l'enroulement 2 hélicoïdal subit une restriction radiale plaçant les organes 14 crampons en position de blocage de l'objet solide implanté par rapport audit tronçon 6 tronconique, ce par quoi l'objet solide implanté est désolidarisé du substrat solide du fait de la rotation et est extrait du substrat solide, puis ;
l'objet extrait étant maintenu fixement, il est procédé ensuite à une mise en rotation de l'enroulement hélicoïdal dans le sens horaire de rotation, la tige 3 hélicoïdale étant une tige 3 hélicoïdale dextrogyre, ou respectivement dans le sens antihoraire de rotation, la tige 3 hélicoïdale étant une tige 3 hélicoïdale lévogyre, ce par quoi l'enroulement 2 hélicoïdal subit une expansion radiale écartant les organes 14 crampons par rapport à l'axe 5 d'allongement du dispositif 1 extracteur, cette expansion radiale étant combinée avec ce par quoi l'objet extrait est libéré du dispositif 1 extracteur avec peu d'effort.

Dans certains modes de réalisation avantageux, la tige 3 hélicoïdale peut être élastiquement déformable radialement par rapport à l'axe 5 d'allongement de l'enroulement 2 hélicoïdal. En particulier, la tige 3 hélicoïdale peut être avantageusement élastiquement déformable en expansion radiale lors de l'entrainement en rotation du dispositif 1 extracteur selon l'invention dans le sens horaire pur une tige 3 hélicoïdale dextrogyre ou dans le sens antihoraire pur une tige 3 hélicoïdale lévogyre et de l'enfoncement de l'enroulement 2 hélicoïdal dans le substrat solide. Dans ces modes de réalisation, le blocage de l'objet solide implanté par ledit tronçon 6 tronconique, intervient pour un enfoncement plus profond du dispositif 1 extracteur par rapport à l'objet solide implanté. La longueur dudit tronçon 6 tronconique coopérant avec l'objet solide implanté est ainsi augmentée et l'extraction est favorisée.

Dans ces modes de réalisation avantageux, si la désolidarisation de l'objet solide implanté et du substrat solide n'est que partielle, il est procédé à une inversion du sens de rotation de l'enroulement 2 hélicoïdal -dans le sens antihoraire pour une tige 3 hélicoïdale dextrogyre ou dans le sens horaire pour une tige 3 hélicoïdale lévogyre-, ce par quoi la tige 3 hélicoïdale et en particulier la tige 3 hélicoïdale dudit tronçon 6 tronconique subit une restriction radiale d'enserrement augmenté de l'objet solide implanté. L'objet solide implanté est extrait du fait de cette rotation dans le sens inversé de rotation.

Dans certains modes de réalisation d'un dispositif 1 extracteur selon l'invention, la tige 3 hélicoïdale présente une extrémité 13 pointue de forage permettant de déstabiliser le substrat solide -notamment le sol- autour de l'objet solide implanté -notamment de la souche à extraire-.

L'invention peut faire l'objet de nombreuses variantes et applications autres que celles décrites ci-dessus. En particulier, la longueur du tronçon tronconique et/ou du tronçon cylindrique, le nombre de spires et le pas du tronçon tronconique et/ou du tronçon cylindrique, le diamètre en section droite transversale du tronçon tronconique et/ou du tronçon cylindrique peuvent varier selon la morphologie de l'objet solide implanté dont l'extraction est envisagée. Également le diamètre en section droite transversale de la tige hélicoïdale peut varier ainsi que le matériau formant cette tige hélicoïdale. En outre, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Dispositif (1) extracteur d'un objet solide implanté dans un substrat solide, le dispositif (1) extracteur comprenant un enroulement (2) hélicoïdal formé d'une tige (3) hélicoïdale, l'enroulement (2) hélicoïdal s'étendant longitudinalement selon un axe (5) d'allongement du dispositif (1) extracteur, dispositif (1) dans lequel ;
un tronçon, dit tronçon (6) tronconique, de l'enroulement (2) hélicoïdal, s'étendant jusqu'à une extrémité, dite extrémité (7) de forage, libre de l'enroulement (2) hélicoïdal, est formé d'une pluralité de spires (4) de la tige (3) hélicoïdale, les spires (4) de la tige (3) hélicoïdale formant ledit tronçon (6) tronconique étant non jointives et définissant une face (8) interne dudit tronçon (6) tronconique, de forme globalement tronconique et de section droite transversale par rapport à l'axe (5) d'allongement, croissante vers ladite extrémité (7) de forage ;
l'autre extrémité, dite extrémité (9) d'entrainement, de l'enroulement (2) hélicoïdal étant engagée solidairement avec un organe (10) d'assemblage de l'enroulement (2) hélicoïdal et d'un dispositif d'entrainement en rotation du dispositif (1) extracteur selon l'axe (5) d'allongement du dispositif (1) extracteur,
**caractérisé en ce qu'**il comprend au moins un organe (14) rigide formant crampon traversé par la tige (3) hélicoïdale, l'organe rigide (14) formant crampon étant monté mobile en rotation par rapport à une portion de la tige (3) hélicoïdale qui le traverse, la tige (3) hélicoïdale étant mobile en déplacement au travers de l'organe rigide (14) formant crampon qu'elle traverse.

2. Dispositif (1) selon la revendication 1, **caractérisé en ce que** l'enroulement (2) hélicoïdal forme un deuxième tronçon, dit tronçon (11) cylindrique, s'étendant à partir dudit tronçon (6) tronconique jusqu'à ladite extrémité (9) d'entrainement de l'enroulement (2) hélicoïdal, la pluralité de spires (4) de la tige (3) hélicoïdale formant ledit tronçon (11) cylindrique définissant une face (12) interne de forme cylindrique de révolution.

3. Dispositif selon l'une des revendications 1 ou 2, **caractérisé en ce que** la tige (3) hélicoïdale présente une forme convexe selon au moins une coupe radiale par rapport à l'axe (5) d'allongement de l'enroulement (2) hélicoïdal.

4. Dispositif selon l'une des revendications 1 à 3, **caractérisé en ce que** la tige (3) hélicoïdale formant ledit tronçon (6) tronconique présente un pas de valeur constante sur la longueur dudit tronçon (6) tronconique.

5. Dispositif selon l'une des revendications 1 à 4, **caractérisé en ce que** la tige (3) hélicoïdale présente une extrémité (13) libre s'étendant à ladite extrémité (7) de forage de l'enroulement (2) hélicoïdal, l'extrémité (13) libre étant conformée pour pouvoir faciliter une progression de l'enroulement (2) hélicoïdal dans le substrat solide et pour fragiliser le substrat solide autour de l'objet solide implanté, du fait de cette progression.

6. Dispositif selon l'une des revendications 1 à 5, **caractérisé en ce qu'**au moins un organe (14) rigide formant crampon présente une forme choisie parmi une forme polyédrique inscrite dans une sphère et une forme sphérique, chaque organe (14) crampon étant traversé radialement par la tige (3) hélicoïdale.

7. Dispositif selon l'une des revendications 1 à 6, **caractérisé en ce que** les organes (14) rigides formant crampons sont de même taille et présentent un rayon de valeur inférieure à la valeur d'un demi pas de la tige (3) hélicoïdale.

8. Dispositif selon l'une des revendications 1 à 7, **caractérisé en ce qu'**il comprend un nombre d'organe (4) rigide formant crampon compris entre 5 et 30.

9. Dispositif selon l'une des revendications 1 à 8, **caractérisé en ce que** la tige (3) hélicoïdale présente au moins une butée (15) fixe et adaptée pour pouvoir bloquer au moins un organe (14) solide formant crampon en déplacement le long de la tige (3) hélicoïdale en direction de ladite extrémité (9) d'entrainement.

10. Dispositif selon la revendication 9, **caractérisé en ce que** chaque butée (15) fixe est disposée sur la tige (3) hélicoïdale dudit tronçon (6) tronconique de l'enroulement (2) hélicoïdal.

11. Dispositif (1) selon l'une des revendications 9 ou 10 **caractérisé en ce que** chaque organes (14) rigides formant crampon est interposé entre deux butées (15) fixes.

12. Dispositif selon l'une des revendications 9 à 11, **caractérisé en ce qu'**au moins une butée (15) fixe est une butée (16) déplaçable et blocable.

13. Dispositif selon l'une des revendications 1 à 12, **caractérisé en ce que** l'enroulement (2) hélicoïdal est un enroulement à pas variable.

14. Procédé d'extraction d'un objet solide implanté -notamment d'un objet solide allongé implanté sensiblement verticalement- dans un substrat solide - notamment dans un sol-, **caractérisé en ce qu'**il comprend les étapes suivantes :
- un dispositif (1) extracteur selon l'une des revendication 1 à 13 est choisi ;
- ladite extrémité (7) de forage du dispositif (1) extracteur est mise au contact du substrat solide, puis ;
- lors d'une première étape, le dispositif (1) extracteur est entrainé en rotation selon un premier sens de rotation, ce par quoi ledit tronçon (6) tronconique fore le substrat solide autour de l'objet solide implanté et coopère avec l'objet solide implanté, par serrage progressif de l'objet solide implanté du fait dudit tronçon (6) tronconique, jusque dans un état du dispositif (1) extracteur dans lequel le dispositif (1) extracteur est bloqué en rotation par l'objet solide implanté, l'objet solide implanté étant au moins en partie désolidarisé du substrat solide, puis ;
- lors d'une deuxième étape, le dispositif (1) extracteur est entrainé en rotation selon un deuxième sens de rotation, opposé au premier sens, ce par quoi un resserrement radial dudit tronçon (6) tronconique se produit autour de l'objet solide implanté du fait de la tige (3) hélicoïdale et du deuxième sens de rotation et un serrage du substrat solde augmenté par rapport au serrage obtenu lors de la première étape de rotation selon le premier sens de rotation, le serrage augmenté permet d'augmenter l'intensité d'une contrainte en rotation qui appliquée sur l'objet solide implanté, d'intensité augmentée par rapport à la contrainte appliquée lors de la première étape, ce par quoi l'objet est au moins en partie désolidarisé du substrat solide
- l'objet solide est extrait du substrat solide.

15. Procédé selon la revendication 14, **caractérisé en ce que** l'objet au moins en partie désolidarisé du substrat solide est extrait par traction de l'objet désolidarisé selon un axe de traction sensiblement confondu avec l'axe de rotation de l'enroulement (2) hélicoïdal et sans détérioration des objets voisins, des piquets et des fils de fer porteurs.
